Europäisches Patentamt

European Patent Office

Office européen des brevets

(19)

(11) **EP 1 461 468 B1**

(12) **FASCICULE DE BREVET EUROPEEN**

(45) Date de publication et mention
de la délivrance du brevet:
**25.05.2005 Bulletin 2005/21**

(21) Numéro de dépôt: **02796883.3**

(22) Date de dépôt: **28.11.2002**

(51) Int Cl.7: **C22C 38/40**, C22C 19/05

(86) Numéro de dépôt international:
**PCT/FR2002/004079**

(87) Numéro de publication internationale:
**WO 2003/046241 (05.06.2003 Gazette 2003/23)**

(54) **ALLIAGE FERROMAGNETIQUE POUR LA CUISSON PAR INDUCTION**

FERROMAGNETISCHE LEGIERUNG FÜR DAS INDUKTIONSKOCHEN

FERROMAGNETIC ALLOY FOR INDUCTION HEATED COOKING

(84) Etats contractants désignés:
**AT BE BG CH CY CZ DE DK EE ES FI FR GB GR
IE IT LI LU MC NL PT SE SK TR**

(30) Priorité: **30.11.2001 FR 0115479**

(43) Date de publication de la demande:
**29.09.2004 Bulletin 2004/40**

(73) Titulaire: **Imphy Alloys
92800 Puteaux (FR)**

(72) Inventeurs:
  • **FRAISSE, Hervé
    F-58000 Nevers (FR)**
  • **WAECKERLE, Thierry
    F-58000 Nevers (FR)**
  • **GROSBETY, Yves
    F-93160 Noisy le Grand (FR)**
  • **COUTU, Lucien
    London W14 Ory (GB)**

(74) Mandataire: **Plaisant, Sophie Marie
Usinor DIR-PI,
Immeuble "La Pacific" - TSA 10001
92070 La Défense Cédex (FR)**

(56) Documents cités:
    **EP-A- 0 180 927        EP-A- 0 251 295
    EP-A- 0 827 256        EP-A- 1 005 822
    FR-A- 2 453 627        FR-A- 2 689 748
    FR-A- 2 766 048        GB-A- 862 363
    GB-A- 1 404 898        US-A- 2 655 716
    US-A- 3 813 239        US-A- 4 742 324**

    • **PATENT ABSTRACTS OF JAPAN vol. 016, no.
      006 (C-0900), 9 janvier 1992 (1992-01-09) -& JP
      03 229838 A (NIPPON STAINLESS STEEL CO
      LTD), 11 octobre 1991 (1991-10-11)**
    • **PATENT ABSTRACTS OF JAPAN vol. 016, no.
      304 (C-0959), 6 juillet 1992 (1992-07-06) -& JP 04
      083841 A (NIPPON YAKIN KOGYO CO LTD), 17
      mars 1992 (1992-03-17)**

**Description**

La présente invention concerne l'utilisation l'un alliage ferromagnétique pour la réalisation d'éléments chauffants pour récipients culinaires destinés à la cuisson par induction.

La cuisson des aliments par induction est effectuée au moyen d'un inducteur généralement placé sous une plaque en vitro-céramique, transparente aux champs électromagnétiques, sur laquelle on pose le récipient culinaire dont on veut chauffer le contenu. La circulation du courant à haute fréquence dans l'inducteur crée un champ magnétique induisant des courants de Foucault dans le récipient qui s'échauffe alors par effet Joule. Ainsi, le chauffage par induction met en jeu trois phénomènes physiques successifs qui sont le transfert d'énergie de l'inducteur au récipient par voie électromagnétique, puis la transformation de l'énergie électrique en chaleur dans le récipient par effet Joule, et enfin la transmission de la chaleur par conduction thermique à l'aliment.

Le récipient devient avec l'induction un élément actif du système de chauffage puisque c'est en son sein que s'effectue la conversion d'énergie, d'où une faible inertie thermique et une grande efficacité énergétique.

Il existe également des appareils de cuisson spécifiques sans plaques vitrocéramiques pour lesquels les matériaux objets de ce brevet doivent permettre la fabrication des récipients.

Afin d'obtenir un bon rendement énergétique, on utilise pour ces récipients des fonds métalliques présentant une forte conductivité électrique et une forte amplification du champ magnétique aux fréquences de fonctionnement utilisées, qui sont comprises entre 20 et 50kHz. On utilise donc généralement un alliage qui est ferromagnétique dans la plage de température de travail du récipient et qui présente une aimantation suffisamment élevée pour générer des pertes magnétiques importantes.

Ces récipients doivent présenter une tenue à la corrosion élevée pour la face en contact avec les aliments, mais aussi dans une moindre mesure pour le fond qui ne doit pas se dégrader lors des lavages.

Ils doivent également être stables mécaniquement afin que le récipient conserve sa géométrie, en particulier la planéité du fond en contact avec le dessus de l'inducteur. En effet, lorsque l'on chauffe un récipient, son fond tend à se dilater. La paroi latérale du récipient, encore appelée jupe, est portée à une température plus faible que le fond et se dilate donc moins, ce qui exerce une contrainte radiale de compression sur ce fond. Celui-ci ne peut alors se dilater qu'en se bombant ce qui dégrade le rendement énergétique de l'ensemble et le confort du consommateur par le bruit et le désagrément qu'il produit. Cet effet est réversible dans les premiers temps d'utilisation du récipient, mais peut entraîner une dégradation irréversible après un grand nombre de ces cycles thermiques par transformation structurale des matériaux du fond. Ce phénomène est particulièrement sensible lorsque seul le fond du récipient contient un matériau très conducteur (aluminium ou cuivre par exemple).

Dans le cas de matériaux multicouches dont les différentes couches présentent généralement des coefficients de dilatation très différents, cette différence de coefficient introduit un effet bilame tendant aussi bien à déformer le fond du récipient qu'à faire évoluer irréversiblement l'adhésion des différentes couches vers des décohésions localisées, et donc une perte de rendement significative du récipient.

Pour réaliser ces récipients, on emploie couramment pour la partie ferromagnétique, des aciers inoxydables ferritiques, comme Fe-17% Cr, ou bien des matériaux symétriques tricouche : acier inoxydable austénitique / acier inoxydable ferritique / acier inoxydable austénitique. Ces matériaux ont l'inconvénient de présenter une température de Curie supérieure à 600°C, ce qui implique que les fonds de ses récipients peuvent eux-aussi atteindre cette température, ce qui peut entraîner la perte des aliments et la dégradation du récipient, et cela même bien avant cette température de 600°C.

Afin de remédier à ce problème, FR 2 453 627 propose de fabriquer un fond de récipient en matériau tricouche comprenant un alliage dont le point de Curie est compris entre 60 et 200°C. Tant que la température du récipient est inférieure au point de Curie, l'alliage est ferromagnétique et peut dégager des pertes par courants induits, ce qui chauffe le récipient. Dès que la température du récipient dépasse le point de Curie, l'alliage n'est plus ferromagnétique et le chauffage cesse, pour reprendre à nouveau dès que la température du récipient tombe sous le point de Curie. On obtient donc ainsi une régulation thermique du récipient. Cependant, un tel matériau n'est pas adapté à la cuisson ou à la friture des aliments qui nécessite de pouvoir atteindre des températures allant de 220 à 320°C. De plus rien n'est proposé dans ce brevet pour assurer une bonne stabilité géométrique du récipient ainsi qu'une bonne résistance à la corrosion des deux faces du récipient.

Le même principe est repris dans FR 2 689 748, dans lequel on propose de fabriquer des récipients en matériau tricouche comprenant un alliage tel que du Fe64Ni36 dont le point de Curie est à 250°C. Mais ce type d'alliage présente une tenue à la corrosion très médiocre, ainsi qu'un coefficient de dilatation très faible. Or, cet alliage est plaqué contre une couche métallique ayant un coefficient de dilatation nettement plus élevé, ce qui entraîne une déformation du fond du récipient par effet bilame lorsqu'on le chauffe, déformation qui peut parfois devenir irréversible. En outre, on peut également observer une dégradation de l'accrochage entre les couches due à un phénomène de fluage sous contrainte cyclique et en température.

EP 1 005 822 décrit un alliage ferromagnétique destiné à la partie chauffante d'un récipient culinaire chauffé par induction. L'alliage est du type FeNiCuX, X étant un ou plusieurs des éléments Cr, Mo, Mn, Si, Al, W, Nb, V et Ti. La composition de cet alliage est principalement : Ni: 50 à 85%, Cu: 0 à 50%, X: 0 à 12%. Sa température de Curie est comprise entre 150°C et 370°C et son coefficient de magnétostriction $\lambda_s \leq 5.10^{-6}$.

L'invention a donc pour but de mettre à disposition un alliage permettant la réalisation de parties chauffantes de récipients culinaires destinés à la cuisson par induction, ces parties ne se déformant ni au cours du temps, ni en cours de fonctionnement, et dont la résistance à la corrosion soit bonne sur ses deux faces, ledit récipient devant en outre permettre la cuisson ou la friture d'aliments à une température régulée automatiquement par le récipient, et comprise entre 30 et 350°C. Cet alliage doit en outre être apte à la mise en oeuvre par placage, emboutissage, pressage, découpe, usinage, ou tout autre procédé adapté et doit générer des pertes élevées par courants induits.

A cet effet, l'invention a pour premier objet l'utilisation pour la réalisation d'éléments chauffants pour récipients culinaires destinés à la cuisson par induction, d'un alliage ferromagnétique dont la composition chimique comprend, en % en poids :

$$32,5\% \leq Ni \leq 72,5\%$$

$$5\% \leq Cr \leq 18\%$$

$$0,01\% \leq Mn \leq 4\%$$

$$C \leq 1\%$$

éventuellement un ou plusieurs éléments choisis parmi Mo, V, Co, Cu, Si, W, Nb et Al, la somme des teneurs en ces éléments étant inférieure ou égale à 10%, le reste étant du fer et des impuretés résultant de l'élaboration, la composition chimique satisfaisant en outre les relations suivantes :

$$Cr - 1,1Ni + 23,25 \leq 0\%$$

$$45Cr + 11Ni \leq 1360$$

$$Ni + 3Cr \geq 60\% \text{ si } Ni \geq 37,5$$

$$Cr \geq 7,5 \text{ si } Ni \leq 37,5.$$

Dans un mode de réalisation préféré, l'alliage comporte une teneur en nickel comprise entre 34 et 50%Ni et ne contient pas d'éléments choisis parmi Mo, V, Co, Cu, Si, W, Nb et Al.

Dans un autre mode de réalisation préféré, l'alliage présente en outre une teneur en chrome supérieure à 13% en poids. Cet alliage présente l'avantage de pouvoir être utilisé comme seul matériau du récipient en compatibilité avec les aliments sur la face interne du récipient, car il est alors alimentaire.

Dans un autre mode de réalisation préféré, l'alliage présente une teneur en nickel comprise entre 48 et 52%, et une teneur en chrome entre 7 et 10%.

Dans un autre mode de réalisation préféré, l'alliage présente une teneur en nickel supérieure ou égale à 52%, et de façon plus particulièrement préférée, supérieure à 55%.

Dans un autre mode de réalisation préféré, l'alliage présente une teneur en manganèse supérieure ou égale à 0,1% afin de faciliter la mise en oeuvre de l'alliage.

Dans un autre mode de réalisation préféré, l'alliage présente une teneur en manganèse inférieure ou égale à 0,5%.

Dans un autre mode de réalisation préféré, l'alliage présente une température de Curie Tc comprise entre 30 et 350°C, un coefficient de dilation thermique $\alpha_{Tc}$ entre l'ambiante et Tc supérieur ou égal à $6,5.10^{-6}K^{-1}$, voire supérieur à $9.10^{-6}K^{-1}$, une induction à saturation Bs supérieure ou égale à 0,2T, voire supérieure à 0,5T, et dont le courant d'oxydation maximal en test de corrosion tension-courant en milieu acide $I_{max}$ est inférieur à 1 mA.

Un second objet de l'invention est constitué par l'utilisation de l'alliage ci-dessus, pour la réalisation d'éléments chauffants mono ou multicouches, tels que des fonds monocouches, pour récipients culinaires destinés à la cuisson par induction.

Les teneurs en nickel et en chrome de l'alliage permettent d'obtenir une bonne aptitude à l'emboutissage, à la découpe mécanique, au pressage, à l'usinage. Elles permettent également d'obtenir une bonne résistance à l'oxydation à l'air, tout comme une très bonne tenue à la corrosion à chaud.

En outre, l'alliage présente une bonne tenue à la corrosion en atmosphère humide, en milieu acide, et en milieu basique, en particulier pour un aspect esthétique et pour ne pas dégrader le récipient. Pour déterminer la tenue à la corrosion de l'alliage, on réalise un test courant I - tension U en milieu acide sulfurique 0,01M en prenant l'alliage comme électrode et en imposant différentes valeurs de tension par rapport à une électrode de platine. Différentes valeurs de I sont mesurées en correspondance des différentes valeurs de U, et on détermine la valeur maximale $I_{max}$ de I qui caractérise la tenue à la corrosion de l'alliage. Pour que l'alliage magnétique ne soit pas affecté visuellement en surface par la corrosion basique, acide ou en atmosphère humide, il faut que $I_{max}$ <1mA, ce qui est vérifié pour l'alliage selon l'invention.

Les présents inventeurs ont en outre pu constater que l'alliage utilisé selon l'invention présente une température de Curie comprise entre 30 et 350°C, ce qui permet de stabiliser la température dans la plage de cuisson habituelle des aliments et en dessous du seuil de dégradation des revêtements anti-adhésifs éventuels. La température de Curie de l'alliage est de préférence inférieure ou égale à 320°C.

Une telle fonction de l'alliage permet aussi bien d'éviter la brûlure accidentelle des aliments et de l'utilisateur, que la dégradation accélérée du récipient sous les effets couplés de la température et de la fatigue sous sollicitations mécaniques cycliques par effet bilame lorsque l'alliage est plaqué contre un autre matériau.

Par ailleurs, l'alliage utilisé selon l'invention présente un coefficient de dilatation supérieur ou égal à 6,5 $10^{-6}K^{-1}$, et de préférence supérieur ou égal à 9 $10^{-6}K^{-1}$. Lorsqu'il est plaqué ou collé contre un autre matériau permettant une bonne diffusion de la chaleur, comme l'aluminium, par exemple, cette caractéristique permet d'obtenir une grande stabilité dimensionnelle du fond du récipient, en particulier lorsque l'on plaque de l'autre côté de la couche d'aluminium un acier inoxydable ferritique ou austénitique.

Cette caractéristique de l'alliage permet également, en combinaison avec la limitation de son échauffement à 350°C, de garantir que son accrochage avec une couche d'aluminium résiste à de nombreuse heures de fonctionnement.

En effet, les deux facteurs accélérant le vieillissement de cet accrochage sont la température et l'effet bilame lié à la différence de coefficient de dilatation aluminium / alliage ferromagnétique. Par l'autorégulation de température lié au point de Curie on restreint fortement le facteur température.

L'effet bilame du aux différences de coefficient de dilatation thermique des matériaux, pourrait produire des contraintes réciproques entre matériaux, et donc en fonctionnement un phénomène de fluage thermiquement activé sous contrainte cyclique amenant peu à peu les matériaux à prendre la forme stable à chaud malgré la rigidité que peut donner initialement une couche épaisse d'un des matériaux. Il en résulterait un fond de récipient bombé, ou bien encore une dégradation de l'accrochage inter-couche par le même mécanisme de fluage, entraînant des décohésions localisées, une perte de rendement de chauffage et un bruit magnétostrictif du récipient. En équilibrant la composition de l'alliage, on obtient un matériau dont le coefficient de dilatation thermique entre la température ambiante et la température de Curie est relativement proche de celui de l'aluminium, et des aciers inoxydables ferritiques et austénitiques, minimisant, voire supprimant l'effet bilame.

La combinaison de ces deux caractéristiques de l'alliage permet donc d'obtenir un accrochage durable avec ces matériaux.

Exemple 1

On élabore un alliage magnétique dont la composition contient 39,3% de fer, 50% de nickel, 10% de chrome, 0,5% de manganèse et 0,2% de silicium. Cet alliage présente une température de Curie $T_{C1}$ de 230°C environ et un coefficient de dilatation thermique entre l'ambiante et 230°C $\alpha_{25-230°C}$ de 10.$10^{-6}K^{-1}$. On plaque sur une bande de cet alliage, une bande d'aluminium dont le coefficient de dilatation thermique à 0°C $\alpha_{0°C}$ est supérieur ou égal à 22.$10^{-6}K^{-1}$, puis l'on plaque sur cette bande d'aluminium une bande d'un alliage comprenant 79,5% de fer, 20% de chrome et 0,5% de titane, dont la température de Curie $T_{C2}$ est largement supérieure à Tc1, et dont le coefficient de dilatation thermique entre 25 et 320°C $\alpha_{25-320°C}$ vaut environ 11,6.$10^{-6}K^{-1}$.

Après différents essais, on a pu constater que l'utilisation d'une couche ferromagnétique à haut point de Curie ($T_{C2}$) sur la face intérieure du récipient produisait peu de chaleur lorsque T > $T_{C1}$. Le multicouche ne vieillit pas après 1 000 h de fonctionnement et a une grande stabilité dimensionnelle. La température du multicouche se stabilise toujours autour de la même valeur inférieure à Tc1 lorsque différents essais de chauffage par induction sont menés avec les même aliments, ce qui permet une cuisson rapide, reproductible en temps et qualité. Enfin, on n'observe pas de tache d'oxydation après un usage intensif en cuisine, en chauffage sur gaz, au lave-vaisselle.

Cette association est donc particulièrement adaptée pour la fabrication d'un récipient de cuisson à température régulée vers 230°C, par exemple pour la cuisson d'aliments tels que le riz, le poisson et les viandes.

Exemple 2

On élabore un alliage magnétique dont la composition contient 41,8% de fer, 45% de nickel, 13% de chrome et 0,2% de manganèse. Cet alliage présente une température de Curie $T_{C1}$ de 150°C environ et un coefficient de dilatation thermique à 0°C $\alpha_{0°C}$ de $9,6.10^{-6}K^{-1}$. On plaque sur une bande de cet alliage, une bande d'aluminium dont le coefficient $\alpha_{0°C}$ est supérieur ou égal à $22.10^{-6}K^{-1}$, puis l'on plaque sur cette bande d'aluminium une bande d'un alliage comprenant 79,5% de fer, 20% de chrome et 0,5% de titane, dont la température de Curie $T_{C2}$ est largement supérieure à $T_{C1}$, et dont le coefficient de dilatation thermique entre 25 et 320°C $\alpha_{25-320°C}$ vaut environ $11,6.10^{-6}K^{-1}$.

Après différents essais, on a pu constater que l'utilisation d'une couche ferromagnétique à haut point de Curie ($T_{C2}$) sur la face intérieure du récipient produisait peu de chaleur lorsque T > $T_{C1}$. Le multicouche ne vieillit pas après 1 000 h de fonctionnement et a une grande stabilité dimensionnelle. En outre, la température du multicouche se stabilise toujours autour de la même valeur inférieure à Tc1 lorsque différents essais de chauffage par induction sont menés avec les même aliments, ce qui permet une cuisson rapide, reproductible en temps et qualité. Enfin, on n'observe pas de tache d'oxydation après un usage intensif en cuisine, en chauffage sur gaz, au lave-vaisselle

Cette association est donc particulièrement adaptée pour la fabrication d'un récipient de cuisson à température régulée vers 140°C-160°, par exemple pour la cuisson d'aliments tels que les légumes, les fruits, ou l'eau sous faible pression.

Exemple 3

On élabore un alliage magnétique dont la composition contient 54,8 à 56,8% de fer, 33% de nickel, de 10 à 12% de chrome et 0,2% de manganèse. Cet alliage présente une température de Curie pouvant varier entre 37 et 70°C et un coefficient de dilatation thermique à 0°C $\alpha_{0°C}$ de 8 à $9,1.10^{-6}K^{-1}$. On plaque sur une bande de cet alliage ayant une épaisseur de 0,6 mm, une bande d'aluminium d'une épaisseur d'au moins 5 mm dont le coefficient de dilatation thermique à 0°C $\alpha_{0°C}$ est supérieur ou égal à $22.10^{-6}K^{-1}$.

Après différents essais, on a pu constater là aussi que ce bicouche ne vieillit pas après 1 000h de fonctionnement et garde une grande stabilité dimensionnelle. La température du multicouche se stabilise toujours vers la même valeur très proche de 37°C lorsque différents essais de chauffage par induction sont menés avec combinaisons d'épaisseur de matériau et/ou différentes géométries d'appareil, ce qui permet d'assurer des produits compatible en température avec le corps humain. En outre, on n'observe pas de tache d'oxydation après un usage intensif en milieu médical ou domestique.

Cette association est donc particulièrement adaptée pour un dispositif de chauffage à destination du corps humain, tel qu'un chauffe-biberon, un dispositif de régulation de température de sang, plasma, une couveuse de nourrisson, un matériel chauffant d'intervention médical, etc..., car elle permet d'avoir avec une très bonne uniformité de température autorégulée à 37°C sur des surfaces importantes.

Exemple 4

On a élaboré, par fusion sous vide, 31 alliages de 50kg de matière, à partir de métaux de haute pureté et coulés en lingotière. Après forgeage et laminage à chaud jusqu'à une épaisseur de 4,5mm, ces différents matériaux ont ensuite été laminés à froid directement à l'épaisseur finale de 0,6mm, découpés en échantillons de diverses formes pour les caractérisations de coefficient de dilatation $\alpha_{Tc}$ entre 20°C et Tc, de point de Curie Tc, d'induction à saturation Bs et de courant max d'oxydation $I_{max}$ et recuits à 1050°C-1h sous hydrogène.

- $\alpha_{Tc}$ est mesuré sur un dilatomètre.
- Bs est mesuré par extraction d'échantillon du champ (1600 Oe) d'un aimant entre 2 bobines de détection reliées à un galvanomètre ; mesure à moins de 3% près.
- Tc est mesuré sur thermomagnétomètre à force magnétique en extrapolant à $\bigcirc$ la tangente à la courbe Force-Température au point d'inflexion de cette courbe.
- $I_{max}$ est le courant maximum relevé sur une courbe d'oxydation courant-tension où on impose des valeurs successives de tension entre l'électrode d'alliage et une électrode platine dans une solution à 0,01M d'acide sulfurique.

Les compositions de ces alliages (à l'exception du fer qui vient en complément) ont été rassemblés dans le tableau suivant :

| Alliage | C (%) | Ni (%) | Cr (%) | Mn (%) | Co (%) | Mo (%) | Si (%) | Al (%) | Cu (%) |
|---|---|---|---|---|---|---|---|---|---|
| 1 (camp.) | 0,0089 | 33,96 | 2,64 | 0,259 | 1,96 | < 0,01 | 0,032 | < 0,02 | < 0,01 |
| 2 (comp.) | 0,0094 | 35,77 | 5,6 | 0,306 | 1,01 | < 0,01 | 0,035 | < 0,02 | < 0,01 |
| 3 (inv.) | 0,0083 | 35,8 | 9,05 | 0,3 | 1,04 | < 0,01 | < 0,02 | < 0,02 | < 0,01 |
| 4 (comp.) | 0,009 | 37,69 | 3,14 | 0,296 | 1,06 | < 0,01 | 0,031 | < 0,02 | < 0,01 |
| 5 (comp.) | 0,0092 | 37,74 | 5,76 | 0,308 | 0,969 | < 0,01 | 0,033 | < 0,02 | < 0,01 |
| 6 (inv.) | 0,0091 | 37,75 | 9,54 | 0,3 | 1,02 | < 0,01 | < 0,02 | < 0,02 | < 0,01 |
| 7 (inv.) | 0,0089 | 37,45 | 8,72 | 0,3 | 3,06 | < 0,01 | < 0,02 | < 0,02 | < 0,01 |
| 8 (comp.) | 0,0066 | 33,46 | 4,88 | 0,133 | < 0,01 | < 0,01 | 0,02 | < 0,02 | < 0,01 |
| 9 (inv.) | 0,0041 | 33,66 | 7,95 | 0,188 | < 0,01 | < 0,01 | < 0,02 | < 0,02 | < 0,01 |
| 10 (comp.) | 0,074 | 34,24 | 2,01 | 0,172 | 0,026 | 5,79 | < 0,02 | < 0,02 | < 0,01 |
| 11 (inv.) | 0,0086 | 37,63 | 9,31 | 0,293 | 0,503 | 0,023 | < 0,02 | < 0,02 | 0,094 |
| 12 (inv.) | 0,0096 | 39,49 | 9,6 | 0,287 | 1,02 | 0,01 | 0,021 | < 0,02 | < 0,01 |
| 13 (comp.) | 0,015 | 33,78 | 2,02 | 0,186 | < 0,01 | 2,03 | < 0,02 | < 0,02 | < 0,01 |
| 14 (comp.) | 0,013 | 33,78 | 0,02 | 0,183 | < 0,01 | 2,21 | < 0,02 | < 0,02 | < 0,01 |
| 15 (inv.) | 0,01 | 49,9 | 9,6 | 0,49 | < 0,01 | < 0,01 | 0,2 | < 0,02 | < 0,01 |
| 16 (comp.) | 0,002 | 36,03 | 0,038 | 0,042 | 0,039 | 0,012 | 0,059 | < 0,02 | 0,017 |
| 17 (comp.) | 0,0057 | 42 | - | - | < 0,01 | < 0,01 | < 0,02 | < 0,02 | < 0,01 |
| 18 (inv.) | 0,0025 | 42 | 6 | 0,21 | < 0,01 | < 0,01 | 0,18 | 0,17 | < 0,01 |
| 19 (inv.) | 0,0021 | 47 | 5 | 0,221 | < 0,01 | < 0,01 | < 0,02 | < 0,02 | < 0,01 |
| 20 (inv.) | 0,0026 | 47 | 6 | 0,133 | < 0,01 | < 0,01 | < 0,02 | < 0,02 | < 0,01 |
| 21 (comp.) | 0,003 | 47,58 | 0,034 | 0,472 | 0,038 | 0,01 | 0,092 | < 0,02 | 0,026 |
| 22 (comp.) | 0,0057 | 55,3 | 3,8 | 0,277 | 0,024 | 0,011 | < 0,02 | < 0,02 | < 0,01 |
| 23 (comp.) | 0,0062 | 72,5 | 3,1 | 0,234 | 0,022 | < 0,01 | < 0,02 | < 0,02 | < 0,01 |
| 24 (comp.) | 0,0042 | 65,5 | 15,1 | 0,255 | 0,015 | < 0,01 | < 0,02 | < 0,02 | < 0,01 |
| 25 (inv.) | 0,0036 | 70,2 | 9,8 | 0,243 | < 0,01 | < 0,01 | < 0,02 | < 0,02 | < 0,01 |
| 26 (inv.) | 0,0087 | 62 | 7,4 | 0,261 | < 0,01 | < 0,01 | < 0,02 | < 0,02 | < 0,01 |
| 27 (inv.) | 0,0052 | 55 | 14,8 | 0,252 | < 0,01 | < 0,01 | < 0,02 | < 0,02 | < 0,01 |
| 28 (comp.) | 0,0068 | 50,2 | 19,7 | 0,241 | < 0,01 | < 0,01 | < 0,02 | < 0,02 | < 0,01 |
| 29 (comp.) | 0,0035 | 39,9 | 20,1 | 0,233 | < 0,01 | < 0,01 | < 0,02 | < 0,02 | < 0,01 |
| 30 (inv.) | 0,0045 | 45,5 | 15,3 | 0,228 | < 0,01 | < 0,01 | < 0,02 | < 0,02 | < 0,01 |
| 31 (comp.) | 0,0066 | 32,3 | 17,4 | 0,262 | < 0,01 | < 0,01 | < 0,02 | < 0,02 | < 0,01 |

Les résultats des essais effectués ont été rassemblés dans le tableau suivant :

| Alliage | $\alpha Tc$ ($10^{-6 \circ}K^{-1}$) | Bs (T) | Tc (°C) | Imax (mA) |
|---|---|---|---|---|
| 1 (comp.) | 4,30 | 1,085 | 205 | 1,20 |
| 2 (comp.) | 5,10 | 0,91 | 181 | 0,25 |
| 3 (inv.) | 8,25 | 0,65 | 127 | 0,90 |
| 4 (comp.) | 4,50 | 1,225 | 252 | 1,10 |

(suite)

| Alliage | $\alpha Tc$ ($10^{-6}$°$K^{-1}$) | Bs (T) | Tc (°C) | Imax (mA) |
|---|---|---|---|---|
| 5 (comp.) | 6,05 | 0,985 | 214 | 0,25 |
| 6 (inv.) | 7,70 | 0,725 | 154 | 0,60 |
| 7 (inv.) | 7,82 | 0,795 | 182 | 0,90 |
| 8 (comp.) | 5,00 | 0,76 | 149 | 0,50 |
| 9 (inv.) | 7,90 | 0,53 | 98 | 0,60 |
| 10 (comp.) | 7,74 | 0,545 | 87 | 1,20 |
| 11 (inv.) | 7,70 | 0,675 | 137 | 0,80 |
| 12 (inv.) | 8,08 | 0,74 | 163 | 0,60 |
| 13 (comp.) | 4,50 | 0,81 | 125 | 1,50 |
| 14 (comp.) | 3,80 | 0,87 | 143 | 3,00 |
| 15 (inv.) | 10,50 | 0,745 | 232 | 0,60 |
| 16 (comp.) | 2,90 | 1,30 | 250 | 6,20 |
| 17 (comp.) | 5,00 | 1,50 | 330 | 5,70 |
| 18 (inv.) | 8,10 | 1,11 | 256 | 0,25 |
| 19 (inv.) | 9,30 | 1,25 | 340 | 0,50 |
| 20 (inv.) | 9,75 | 1,18 | 350 | 0,25 |
| 21 (comp.) | 8,10 | 1,60 | 450 | 5,00 |
| 22 (comp.) | 10,00 | 1,14 | 390 | 1,40 |
| 23 (comp.) | 11,60 | 0,90 | 330 | 1,10 |
| 24 (comp.) | 11,80 | 0,13 | 10 | 0,15 |
| 25 (inv.) | 11,70 | 0,45 | 190 | 0,32 |
| 26 (inv.) | 11,20 | 0,87 | 340 | 0,22 |
| 27 (inv.) | 10,80 | 0,30 | 100 | 0,17 |
| 28 (comp.) | 10,40 | < 0,01 | -50 | 0,12 |
| 29 (comp.) | 9,70 | < 0,01 | -80 | 0,16 |
| 30 (inv.) | 9,50 | 0,20 | 120 | 0,33 |
| 31 (comp.) | 11,20 | < 0,01 | -30 | 0,31 |

Lorsque l'on souhaite fabriquer un récipient caractérisé par une valeur $T_{MAX}$ entre 30 et 350°C, définie par le mode de cuisson et le type d'aliment qu'il est prévu d'apprêter dans ce récipient, on voit qu'il suffit de choisir dans le domaine de composition revendiqué l'alliage qui a le point de Curie correspondant à cette température $T_{MAX}$.
On constate également que les alliages dont la teneur en nickel est supérieure à 52% présentent à la fois une excellente tenue à la corrosion et un fort coefficient de dilation thermique.

**Revendications**

1. Utilisation pour la réalisation d'éléments chauffants pour récipients culinaires destinés à la cuisson par induction, d'un alliage ferromagnétique dont la composition chimique comprend, en % en poids :

$$32,5\% \leq Ni \leq 72,5\%$$

$$5\% \leq Cr \leq 18\%$$

$$0,01\% \leq Mn \leq 0,5\%$$

$$C \leq 1\%$$

éventuellement un ou plusieurs éléments choisis parmi Mo, V, Co, Cu, Si, W, Nb et Al, la somme des teneurs en ces éléments étant inférieure ou égale à 10%, le reste étant du fer et des impuretés résultant de l'élaboration, la composition chimique satisfaisant en outre les relations suivantes :

$$Cr - 1,1Ni + 23,25 \leq 0\%$$

$$45Cr + 11Ni \leq 1360$$

$$Ni + 3Cr \geq 60\% \text{ si } Ni \geq 37,5$$

$$Cr \geq 7,5 \text{ si } Ni \leq 37,5.$$

**2.** Utilisation selon la revendication 1, **caractérisé en outre en ce que** la teneur en chrome dudit alliage est supérieure à 13%.

**3.** Utilisation selon la revendication 1 ou 2, **caractérisé en outre en ce que** la teneur en nickel dudit alliage est comprise entre 34 et 50% et **en ce qu'**il ne contient pas d'éléments choisis parmi Mo, V, Co, Cu, Si, W, Nb et Al.

**4.** Utilisation selon la revendication 1 ou 2, **caractérisé en outre en ce que** la teneur en nickel dudit alliage est supérieure à 52%.

**5.** Utilisation selon la revendication 1, **caractérisé en outre en ce que** la teneur en nickel dudit alliage est comprise entre 48 et 52%, et la teneur en chrome entre 7 et 10%.

**6.** Utilisation selon l'une quelconque des revendication 1 à 5, **caractérisé en outre en ce que** la teneur en manganèse dudit alliage est supérieure ou égale à 0,1%.

**7.** Utilisation selon l'une quelconque des revendications 1 à 6, **caractérisé en ce que** ledit alliage présente une température de Curie Tc comprise entre 30 et 350°C, un coefficient de dilation thermique $\alpha_{Tc}$ entre l'ambiante et Tc supérieur ou égal à $6,5.10^{-6}K^{-1}$, une induction à saturation Bs supérieure ou égale à 0,2T et dont le courant d'oxydation maximal en test de corrosion tension-courant en milieu acide $I_{max}$ est inférieur à 1 mA.

**8.** Utilisation selon la revendication 7, **caractérisé en ce que** le coefficient de dilation thermique $\alpha_{Tc}$ entre l'ambiante et Tc dudit alliage est supérieur ou égal à $9.10^{-6}K^{-1}$, et l'induction à saturation Bs est supérieure ou égale à 0,5 T.

**9.** Utilisation pour la réalisation de fonds de récipients culinaires mono-couches destinés à la cuisson par induction, d'un alliage ferromagnétique dont la composition chimique comprend, en % en poids :

$$32,5\% \leq Ni \leq 72,5\%$$

$$13\% \leq Cr \leq 18\%$$

$$0.01\% \leq Mn \leq 0,5\%$$

$$C \leq 1\%$$

éventuellement un ou plusieurs éléments choisis parmi Mo, V; Co, Cu, Si, W, Nb et Al, la somme des teneurs en ces éléments étant inférieure ou égale à 10%, le reste étant du fer et des impuretés résultant de l'élaboration, la composition chimique satisfaisant en outre les relations suivantes :

$$Cr-1,1Ni + 23,25 \leq 0\%$$

$$45Cr + 11Ni \leq 1360$$

$$Ni + 3Cr \geq 60\% \text{ si } Ni \geq 37,5$$

$$Cr \geq 7,5 \text{ si } Ni \leq 37,5.$$

**Patentansprüche**

1. Nutzanwendung zur Herstellung von sich erwärmenden Elementen für Kochgefäße, die für das Induktionskochen bestimmt sind, aus einer ferromagnetischen Legierung, deren chemische Zusammensetzung in Gew.-% umfasst:

$$32,5 \% \leq Ni \leq 72,5 \%$$

$$5 \% \leq Cr \leq 18 \%$$

$$0,01 \% \leq Mn \leq 0,4 \%$$

$$C \leq 1 \%$$

eventuell eines oder mehrere Elemente, die aus Mo, V, Co, Cu, Si, W, Nb und Al ausgewählt sind, wobei die Summe der Gehalte an diesen Elementen kleiner oder gleich 10 % ist, während der Rest aus Eisen und sich bei der Verhüttung ergebenden Verunreinigungen ist, wobei die chemische Zusammensetzung außerdem den folgenden Relationen genügt:

$$Cr-1,1Ni + 23,25 \leq 0 \%$$

$$45Cr + 11Ni \leq 1360$$

$$Ni + 3Cr \geq 60 \%, \text{ wenn } Ni \geq 37,5$$

$$Cr \geq 7,5, \text{ wenn } Ni \leq 37,5.$$

2. Nutzanwendung nach Anspruch 1, außerdem **dadurch gekennzeichnet, dass** der Chromgehalt der Legierung größer als 13 % ist.

3. Nutzanwendung nach Anspruch 1 oder 2, außerdem **dadurch gekennzeichnet, dass** der Nickelgehalt der Legierung zwischen 34 und 50 % enthalten ist und dass sie keine aus Mo, V, Co, Cu, Si, W, Nb und Al ausgewählten Elemente enthält.

4. Nutzanwendung nach Anspruch 1 oder 2, außerdem **dadurch gekennzeichnet, dass** der Nickelgehalt der Legierung größer als 52 % ist.

5. Nutzanwendung nach Anspruch 1, außerdem **dadurch gekennzeichnet, dass** der Nickelgehalt der Legierung zwischen 48 und 52 % und der Chromgehalt zwischen 7 und 10 % enthalten ist.

6. Nutzanwendung nach einem der Ansprüche 1 bis 5, außerdem **dadurch gekennzeichnet, dass** der Mangangehalt der Legierung größer oder gleich 0,1 % ist.

7. Nutzanwendung nach einem der Ansprüche 1 bis 6, **dadurch gekennzeichnet, dass** die Legierung eine Curie-Temperatur Tc, die zwischen 30 und 350 °C enthalten ist, einen Wärmeausdehnungskoeffizienten $\alpha_{TC}$, der zwischen der Raumtemperatur und Tc größer oder gleich $6{,}5 \cdot 10^{-6} K^{-1}$ ist, und eine Sättigungsinduktion Bs größer oder gleich 0,2 T aufweist, wobei ihr maximaler Oxidationsstrom $I_{max}$ bei einem Spannungs-Strom-Korrosionstest im sauren Milieu kleiner als 1 mA ist.

8. Nutzanwendung nach Anspruch 7, **dadurch gekennzeichnet, dass** der Wärmeausdehnungskoeffizient $\alpha_{TC}$ zwischen der Raumtemperatur und Tc der Legierung größer oder gleich $9 \cdot 10^{-6} K^{-1}$ und die Sättigungsinduktion Bs größer oder gleich 0,5 T ist.

9. Nutzanwendung zur Herstellung von Monoschicht-Böden von Kochgefäßen, die für das Induktionskochen bestimmt sind, aus einer ferromagnetischen Legierung, deren chemische Zusammensetzung in Gew.-% umfasst:

$$32{,}5 \% \leq Ni \leq 72{,}5 \%$$

$$13 \% \leq Cr \leq 18 \%$$

$$0{,}01 \% \leq Mn \leq 0{,}4 \%$$

$$C \leq 1 \%$$

eventuell eines oder mehrere Elemente, die aus Mo, V, Co, Cu, Si, W, Nb und Al ausgewählt sind, wobei die Summe der Gehalte an diesen Elementen kleiner oder gleich 10 % ist, während der Rest aus Eisen und sich bei der Verhüttung ergebenden Verunreinigungen ist, wobei die chemische Zusammensetzung außerdem den folgenden Relationen genügt:

$$Cr - 1{,}1Ni + 23{,}25 \leq 0 \%$$

$$45Cr + 11Ni \leq 1360$$

$$Ni + 3Cr \geq 60 \%, \text{ wenn } Ni \geq 37{,}5$$

$$Cr \geq 7{,}5, \text{ wenn } Ni \leq 37{,}5.$$

**Claims**

1.  Use, for producing heating elements for cooking vessels intended for induction cooking, of a ferromagnetic alloy whose chemical composition comprises, in per cent by weight:

    $$32.5\% \leq Ni \leq 72.5\%$$

    $$5\% \leq Cr \leq 18\%$$

    $$0.01\% \leq Mn \leq 4\%$$

    $$C \leq 1\%$$

    optionally one or more elements chosen from Mo, V, Co, Cu, Si, W, Nb and Al, the sum of the contents of these elements being less than or equal to 10%, the balance being iron and impurities resulting from the smelting, the chemical composition furthermore satisfying the following relationships: Cr - 1.1Ni + 23.25 ≤ 0% 45Cr + 11Ni ≤ 1360 Ni + 3Cr ≥ 60% if Ni ≥ 37.5 Cr ≥ 7.5 if Ni ≤ 37.5.

2.  Use according to Claim 1, furthermore **characterized in that** the chromium content of said alloy is greater than 13%.

3.  Use according to Claim 1 or 2, furthermore **characterized in that** the nickel content of said alloy is between 34 and 50% and **in that** it contains no elements chosen from Mo, V, Co, Cu, Si, W, Nb and Al.

4.  Use according to Claim 1 or 2, furthermore **characterized in that** the nickel content of said alloy is greater than 52%.

5.  Use according to Claim 1, furthermore **characterized in that** the nickel content of said alloy is between 48 and 52% and the chromium content is between 7 and 10%.

6.  Use according to any one of Claims 1 to 5, furthermore **characterized in that** the manganese content of said alloy is greater than or equal to 0.1%.

7.  Use according to any one of Claims 1 to 6, **characterized in that** said alloy has a Curie temperature $T_c$ of between 30 and 350°C, a thermal expansion coefficient $\alpha_{T_c}$ between room temperature and $T_c$ of greater than or equal to $6.5 \times 10^{-6}$ K$^{-1}$ and a saturation induction $B_s$ of greater than or equal to 0.2 T and the maximum oxidation current $I_{max}$ of said alloy in a voltage-current corrosion test in acid medium is less than 1 mA.

8.  Use according to Claim 7, **characterized in that** the thermal expansion coefficient $\alpha_{T_c}$ between room temperature and $T_c$ of said alloy is greater than or equal to $9 \times 10^{-6}$ K$^{-1}$ and the saturation induction $B_s$ is greater than or equal to 0.5 T.

9.  Use, for producing bottoms of monolayer cooking vessels intended for induction cooking, of a ferromagnetic alloy whose chemical composition comprises, in per cent by weight:

    $$32.5\% \leq Ni \leq 72.5\%$$

    $$13\% \leq Cr \leq 18\%$$

    $$0.01\% \leq Mn \leq 4\%$$

$$C \leq 1\%$$

optionally one or more elements chosen from Mo, V, Co, Cu, Si, W, Nb and Al, the sum of the contents of these elements being less than or equal to 10%, the balance being iron and impurities resulting from the smelting, the chemical composition furthermore satisfying the following relationships:

$$Cr - 1.1Ni + 23.25 \leq 0\%$$

$$45Cr + 11Ni \leq 1360$$

$$Ni + 3Cr \geq 60\% \text{ if } Ni \geq 37.5$$

$$Cr \geq 7.5 \text{ if } Ni \leq 37.5.$$